# EUROPÄISCHE PATENTSCHRIFT

(11) **EP 1 836 115 B1**
(45) Veröffentlichungstag und Bekanntmachung des Hinweises auf die Patenterteilung: **06.01.2010**
(21) Anmeldenummer: 05811818.3
(22) Anmeldetag: 01.12.2005
(51) Int. Cl.: B65G 49/06

(54) **VORRICHTUNG ZUM TRANSPORTIEREN UND STÜTZEN TAFELFÖRMIGER GEGENSTÄNDE, INSBESONDERE GLASTAFELN**
DEVICE FOR TRANSPORTING AND SUPPORTING PLATE-LIKE OBJECTS, IN PARTICULAR GLASS PLATES
DISPOSITIF DE TRANSPORT ET DE SOUTIEN D'OBJETS EN FORME DE PLAQUE, EN PARTICULIER DE PLAQUES DE VERRE

(30) Priorität: 23.12.2004 AT 21632004
(43) Veröffentlichungstag der Anmeldung: 26.09.2007
(73) Patentinhaber: Lisec, Peter, A-3363 Amstetten-Hausmening (AT)
(72) Erfinder: Lisec, Peter, A-3363 Amstetten-Hausmening (AT)
(74) Vertreter: Beer, Manfred
(86) Internationale Anmeldenummer: PCT/AT2005/000480
(87) Internationale Veröffentlichungsnummer: WO 2006/066289

(56) Entgegenhaltungen:
- EP-A- 1 449 619
- WO-A-2004/050516
- US-A- 3 223 443
- US-A1- 2004 197 184

## Beschreibung

Die Erfindung betrifft eine Vorrichtung und ein Verfahren zum Transportieren und Abstützen von flachen, plattenförmigen Gegenständen, insbesondere (Flach-)Glastafeln, mit wenigstens einer Stützwand, wobei die wenigstens eine Stützwand Zuströmöffnungen für ein Stützfluid aufweist und wobei den Zuströmöffnungen Abströmöffnungen für das Stützfluid zugeordnet sind.

Bekannt ist es, für das Abstützen von Glastafeln diese auf einem Luftkissenfilm oder zwischen Flüssigkeitsfilmen (Wasserfilmen) abgestützt zu halten, und in Richtung ihrer Ebene zu bewegen.

Vorrichtungen, in welchen Glastafeln bei der Bearbeitung und für den Transport zwischen Flüssigkeitsfilmen einseitig oder beidseitig gestützt werden, sind aus der EP 1 449 619 A und der WO 2004/050516 A bekannt.

Nachteilig bei diesen bekannten Verfahren ist es, dass das Fluid, welches die Glastafel abstützt (Gas, insbesondere Luft, oder Flüssigkeit, insbesondere Wasser), seitlich zwischen einer Stützwand und der abgestützten Glastafel abströmen muss, sodass im Randbereich die Stützkraft wegen des dort herrschenden geringeren Drucks in dem Fluid nicht hinreicht. Dies ist insbesondere nachteilig, wenn die Glastafel bearbeitet, z.B. aufgeraut (EP 1 449 619 A), durch einen Wasserstrahl geschnitten (WO 2004/050516 A) oder zum Teilen der Glastafel in Glaszuschnitte geritzt werden soll.

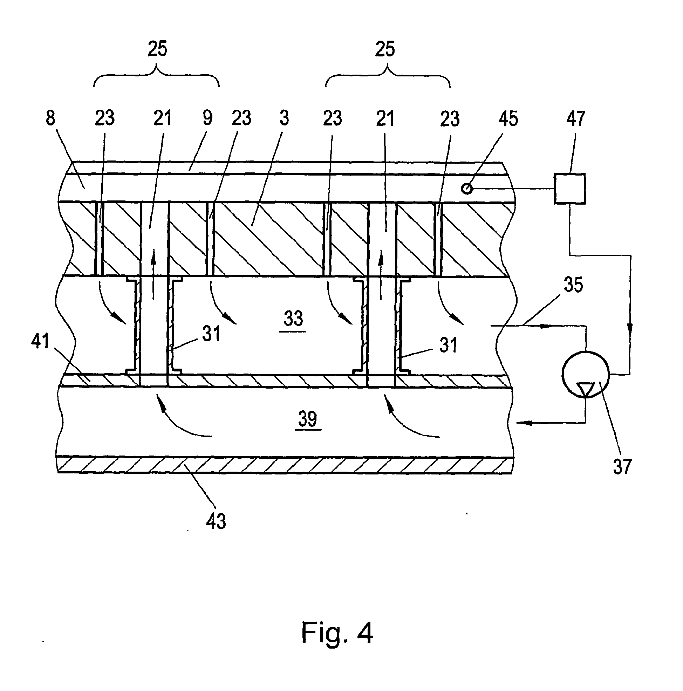

Eine Vorrichtung mit den Merkmalen des einleitenden Teils des unabhängigen Anspruchs 1 ist aus der US 2004/0197184 A1 bekannt. Dieses Dokument offenbart eine Vorrichtung zum Transport von empfindlichen tafelförmigen Gegenständen, wobei die Gegenstände durch ein Luftkissen berührungslos auf einer Unterlagefläche gehalten werden (Fig. 4,5), wobei die unterstützende Luft aus Düsen unter die Tafeln gedrückt wird und in unmittelbarer Nähe der Düsen auch wieder durch entsprechende Öffnungen weggesaugt wird (Fig. 4,5, siehe Pfeile der Luftströme).

Die US-A-3 223 443 beschreibt eine Vorrichtung zum kontaktlosen Halten von Glastafeln von oben in einer horizontal ausgerichteten Ebene. Um die Glastafel von oben halten zu können, wird die Glastafel an die Unterseite der Vorrichtung angesaugt.

Aus der US 6,781,684 B1 ist eine Stützvorrichtung bekannt, bei der Zuströmöffnungen für das Ausbilden eines Luftkissens vorgesehen sind. Dabei ist vorgesehen, dass jeweils mehrere Zuströmöffnungen mit einer einzigen Abströmöffnung, durch welche Luft aus dem Luftkissen wieder abgesaugt wird, Gruppen bilden.

Der Erfindung liegt die Aufgabe zu Grunde, die Nachteile der bekannten Vorrichtungen zu vermeiden und sicherzustellen, dass der Gegenstand, insbesondere die Glastafel, gleichmäßig über seine gesamte Fläche, also auch im Randbereich, mit hinreichender Stützkraft geführt und abgestützt ist.

Gelöst wird diese Aufgabe erfindungsgemäß mit einer Vorrichtung, welche die Merkmale des Anspruches 1 aufweist.

Des Weiteren wird diese Aufgabe erfindungsgemäß mit einem Verfahren gelöst, welches die Merkmale des Anspruches 30 aufweist.

Bevorzugte und vorteilhafte Ausgestaltungen der Erfindung sind Gegenstand der Unteransprüche.

Erfindungsgemäß sind die Zuströmöffnungen und die Abströmöffnungen derart angeordnet, dass an der von dem Gegenstand abgewandten Seite der wenigstens einen Stützwand eine allen Abströmöffnungender Stützwand gemeinsam zugeordnete Kammer, durch die Stützfluid abgezogen wird und die sich über die gesamte Fläche der Stützwand erstreckt, und eine weitere Kammer, durch die Stützfluid zugeführt wird, vorgesehen ist, dass von jeder Kammer eine Abziehleitung ausgeht, die über wenigstens eine Druckerhöhungsvorrichtung an eine Zuführleitung angeschlossen ist und dass die Druckerhöhungsvorrichtung saugseitig an die Kammer und druckseitig an die weitere Kammer angeschlossen ist.

Bei der erfindungsgemäßen Vorrichtung tritt das Stützfluid, das aus einer, oder insbesondere mehreren, Zuströmöffnungen in der Stützwand in den Raum zwischen der Stützwand und dem zu haltenden Gegenstand, insbesondere der zu haltenden Glastafel, ein. Das Stützfluid muss nicht mehr über den Rand der Glastafel abströmen, sondern wird durch die in der Nähe jeder Zuströmöffnung vorgesehenen, mehreren Abströmöffnungen, die mit den Zuströmöffnungen jeweils Gruppen bilden, wieder abgezogen. Dadurch ergibt sich bei der erfindungsgemäßen Vorrichtung bei geringeren Verlusten an Stützfluid auch ein gleichmäßiges Abstützen des Gegenstandes, da die Zuströmöffnungen für Stützfluid und die Abströmöffnungen für Stützfluid über die gesamte Fläche der Stützwand gleichmäßig verteilt angeordnet werden können. So ist erfindungsgemäß in einer bevorzugten Ausführungsform gewährleistet, dass der Druck des Stützfluids über der gesamten Fläche des Gegenstandes, insbesondere der Glastafel, im Wesentlichen gleich groß ist, und das angestrebte exakte Führen und Stützen des Gegenstandes sicher erreicht wird.

Bevorzugt ist es im Rahmen der Erfindung, wenn Abströmöffnungen für das Stützfluid rings um Zuströmöffnungen für das Stützfluid, also die Öffnungen, durch die das Stützfluid durch die Stützwand in den Raum zwischen Stützwand und Gegenstand eintritt, angeordnet sind.

Um einen Druckaufbau im Stützfluid in dem Raum zwischen der Stützwand und dem platten- oder tafelförmigen Gegenstand, insbesondere der Glastafel, zu erreichen, kann vorgesehen sein, dass der lichte Querschnitt der Zuströmöffnung etwas größer ist als die Summe der lichten Querschnitte aller Abströmöffnungen für das Stützfluid, die dieser Zuströmöffnung zugeordnet sind und z.B. rings um diese angeordnet sind.

Ein Vorteil bei der Erfindung ist weiters, dass der Druck des Stützfluid, mit dem dieses zu den Zuströmöffnungen gefördert wird, an das Gewicht des Gegenstandes (Größe und Dicke der Glastafel) angepasst werden kann.

In einer beispielsweisen Ausführungsform sind die Gruppen bestehend aus jeweils wenigstens einer Zuströmöffnung und der diesen zugeordneten Abströmöffnungen über die Gesamtfläche der auf einer Seite des Gegenstandes angeordneten Stützwand oder über die Gesamtflächen der auf beiden Seiten der Glastafel angeordneten Stützwänden gleichmäßig verteilt angeordnet.

Bei der Erfindung kann das Stützfluid bloß auf einer Seite oder auf beiden Seiten des Gegenstandes, der transportiert und abgestützt werden soll, vorgesehen sein.

Beispielsweise hat jede Zuströmöffnung einen Durchmesser von etwa 5 mm, wogegen die beispielsweise in einem Abstand von 2 bis 3 mm von der Zuströmöffnung angeordneten Abströmöffnungen einen Durchmesser von etwa 0,5 mm haben können.

Weitere Einzelheiten, Vorteile und Merkmale der Erfindung ergeben sich aus der nachstehenden Beschreibung bevorzugter Ausführungsbeispiele anhand der angeschlossenen Zeichnungen.

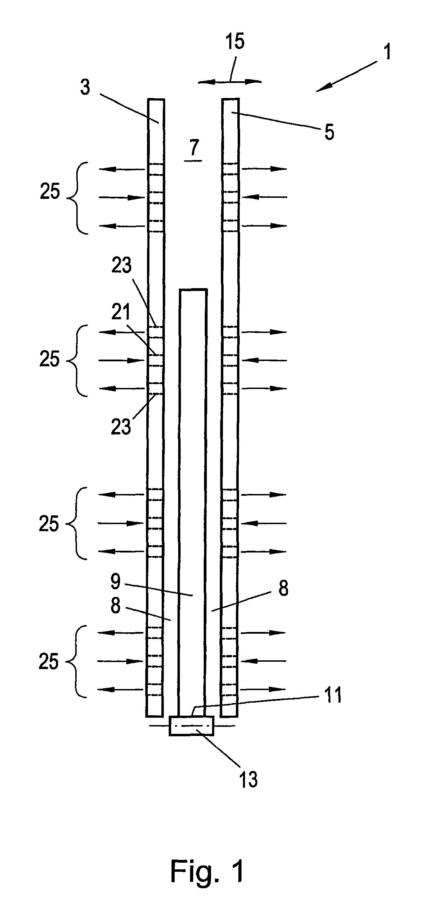

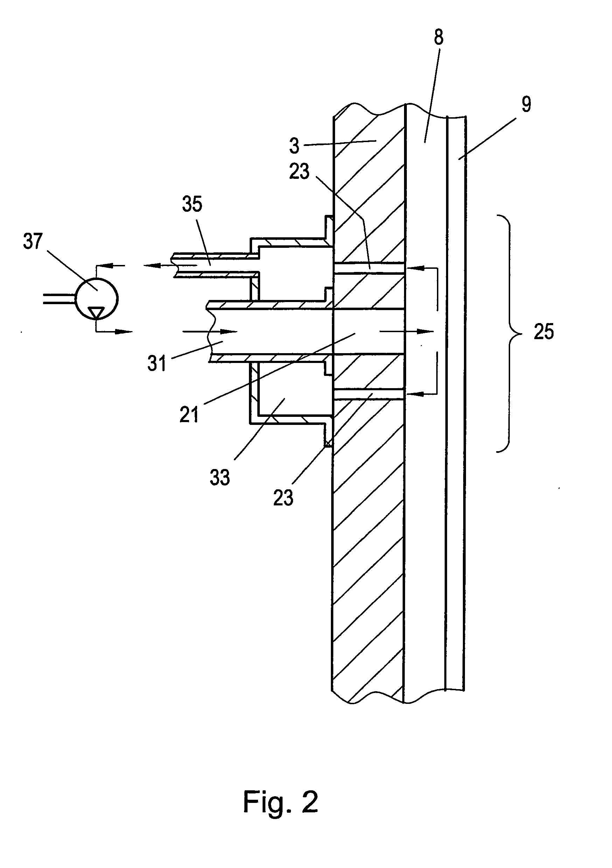

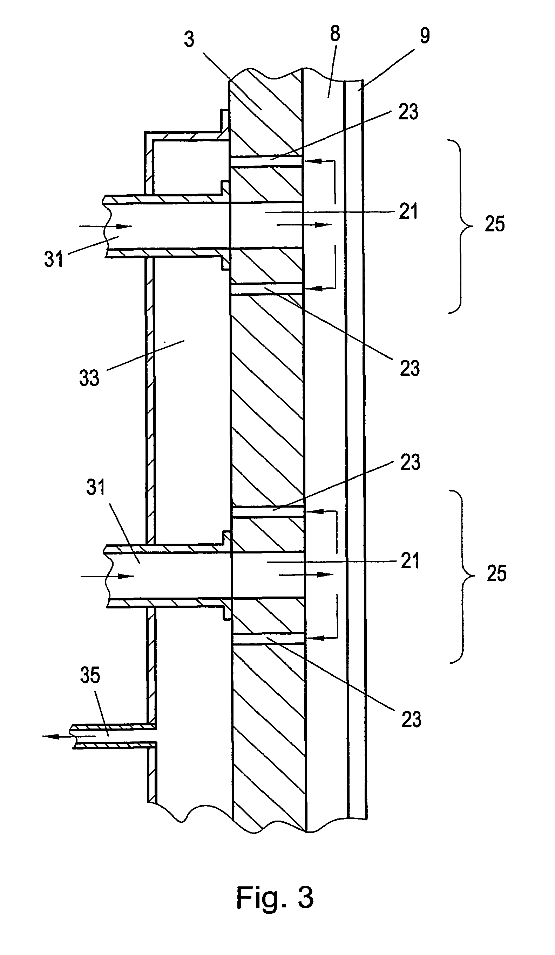

Es zeigt: Fig. 1 schematisch eine erfindungsgemäße Vorrichtung mit zwei Stützwänden, Fig. 2 eine Einzelheit der Vorrichtung aus Fig. 1 in vergrößertem Maßstab, Fig. 3 eine Einzelheit einer abgeänderten Ausführungsform der Vorrichtung aus Fig. 1 in vergrößertem Maßstab und Fig. 4 eine weitere Ausführungsform.

Die erfindungsgemäße Vorrichtung 1 besteht im gezeigten Ausführungsbeispiel aus zwei zueinander beispielsweise parallel ausgerichteten, als Stützwände 3, 5 dienenden Platten, in deren Zwischenraum 7 eine Glastafel 9 zu halten und - falls gewünscht - zu transportieren ist. Die Glastafel 9 steht mit ihrem unteren horizontalen Rand 11 auf einer Abstütz- oder Fördereinrichtung 13 auf, die aus einer Anzahl von Transportrollen, aus einem Endlosfördergurt oder aus mehreren solcher Endlosfördergurten gebildet wird.

Der Abstand der Platten 3, 5 voneinander kann an die Dicke der Glastafel 9, die zwischen ihnen zu halten ist, angepasst werden, beispielsweise indem wenigstens eine der Platten 3, 5 quer zu ihrer Flächenerstreckung verstellbar ist (Doppelpfeil 15 in Fig. 1).

Obwohl in Fig. 1 eine Ausführungsform mit zwei Stützwänden 3, 5 gezeigt ist, ist die Erfindung in gleicher Weise auf Vorrichtungen anwendbar, in welchen nur eine Stützwand vorgesehen ist. In diesem Fall ist die eine Stützwand 3 oder 5 - wie üblich - zur Lotrechtenbevorzugt um wenige Grad (3 bis 5') geneigt angeordnet, wobei eine Glastafel 9 neben der schräg nach oben weisenden Fläche der Stützwand 3 oder 5 angeordnet ist.

In jeder der beiden Stützwände 3, 5 sind Zuströmöffnungen 21 für ein Stützfluid und Abströmöffnungen 23 vorgesehen, durch welche das Stützfluid aus dem Raum 7 bzw. den Teilräumen 8 zwischen der Glastafel 9 und den Stützwänden 3, 5 wieder abströmen kann.

Bevorzugt ist dabei eine Ausführungsform, bei welcher Gruppen 25 aus Zuströmöffnungen 21 und, insbesondere rings um diese herum angeordneten, Abströmöffnungen 23 für das Stützfluid über die Gesamtfläche der Stützwände 3, 5, insbesondere gleichmäßig, verteilt angeordnet sind. Dies ist in Fig. 1 durch Pfeile und die schematisch angedeuteten Zuström- bzw. Abströmöffnungen 21, 23 symbolisiert.

Bei der in Fig. 2 in vergrößertem Maßstab gezeigten Ausführungsform ist jeder Zuströmöffnung 21 für das Zuführen von Stützfluid eine Leitung 31 zugeordnet, durch die das Stützfluid zugeführt wird, sodass es durch die Zuströmöffnung 21 in den Raum 8 zwischen der Stützwand 3 und der Glastafel 9 eintreten kann. Zum Abziehen von Stützfluid über die Abströmöffnungen 23 aus dem Raum 8 zwischen der Glastafel 9 und der Stützwand 3 ist eine Kammer 33 vorgesehen, von der eine Abziehleitung 35 ausgeht. Dabei kann vorgesehen sein, dass die Abziehleitung 35, über die Stützfluid abgezogen wird, ggf. über eine Druckerhöhungsvorrichtung 37 (Pumpe oder dgl.), an die Zuführleitung 31 angeschlossen ist, welche Stützfluid der Zuströmöffnung 21 zuführt.

Bei der in Fig. 3 gezeigten Ausführungsform ist die Kammer 33, in die Stützfluid aus dem Raum 8 zwischen der Stützwand 3 und der Glastafel 9 durch die Austrittsöffnungen 23 abströmt, für alle Austrittsöffnungen 23 gemeinsam ausgebildet und mit nur einer Abziehleitung 35 zum Abziehen von Stützfluid ausgebildet. Auch hier kann die Abziehleitung 35, über die Stützfluid aus der Kammer 33 abgezogen wird, mit der Zuführleitung 31, über die Stützfluid zugeführt wird, verbunden sein, wobei auch hier eine, zwei oder mehrere Druckerhöhungsvorrichtungen (Pumpe 37) eingeschaltet sein können.

Die in Fig. 4 gezeigte Ausführungsform einer erfindungsgemäßen Vorrichtung zeigt, dass die Erfindung auch bei horizontal liegend ausgerichteten Gegenständen 9, insbesondere (Flach-)Glastafeln, angewendet werden kann. In diesem Fall ist die Glastafel 9 ebenso horizontal ausgerichtete wie die Stützwand 3 und der Raum 8 zwischen der Glastafel 9 und der Stützwand 3. In der Stützwand 3 sind wieder über deren Fläche bevorzugt gleichmäßig verteilt Gruppen 25 aus Zuströmöffnungen 21 und insbesondere rings um diese herum angeordneten Abströmöffnungen 23 für das Stützfluid vorgesehen. Für die Zuströmöffnungen 21 und die Abströmöffnungen 23, deren Anordnung und Größe, gilt das oben zu den Ausführungsformen der Fig. 2 und 3 Gesagte.

In der in Fig. 4 gezeigten Ausführungsform münden alle Abströmöffnungen 23 in eine Kammer 33, die zwischen der Stützwand 3 und einer zu dieser vorzugsweisen parallelen Wand 41 vorliegt. Aus der Kammer 33 wird abströmendes Stützfluid durch eine Leitung 35 abgezogen und zu einer Pumpe 37 geführt. Das Stützfluid wird von der Pumpe 37 in eine weitere Kammer 39 gefördert, die zwischen der Wand 41 und einer weiteren Wand 43, die ebenfalls zu den Wänden 3 und 41 parallel ausgerichtet sein kann, geleitet. Aus der weiteren Kammer 39 strömt das Stützfluid über die Zuführleitungen 31 zu den Zuströmöffnungen 21 und aus diesen in den Raum 8 zwischen der Glastafel 9 und der Stützwand 3. Allfällige Verluste an Stützfluid werden ergänzt.

Bei allen Ausführungsformen der erfindungsgemäßen Vorrichtung kann im Raum 8 ein Drucksensor 45 vorgesehen sein, der über eine Steuerung 47 die Pumpe 37 so steuert, dass in dem Raum 8 der jeweils gewünschte und für den sicheren Transport der Glastafel 9 erforderliche Druck aufrechterhalten wird.

Die in Fig. 4 gezeigte Ausführungsform mit zwei neben der Stützwand 3 gezeigten Räumen, bzw. Kammern 33 und 39 kann ebenso bei den Ausführungsformen mit einer oder zwei im Wesentlichen lotrechten Stützwänden 3 und 5 verwirklicht sein.

Als Stützfluid kommen bei der erfindungsgemäßen Vorrichtung 1 sowohl Gase als auch Flüssigkeiten, vornehmlich Luft oder Wasser, in Betracht.

Zusammenfassend kann ein Ausführungsbeispiel der Erfindung wie folgt beschrieben werden:
Um zu gewährleisten, dass die von dem Druck eines Stützfluids abhängige Stützkraft auch im Randbereich eines zu haltenden bzw. zu transportierenden Gegenstandes 9, insbesondere (Flach-)Glastafeln, im Wesentlichen gleich groß ist wie die Stützkraft im mittleren Bereich der Fläche des Gegenstandes 9, sieht die erfindungsgemäße Vorrichtung 1 an wenigstens einer Stützwand 3 bzw. 5 Zuströmöffnungen 21 vor, denen Abströmöffnungen 23 jeweils unmittelbar zugeordnet sind.

## Patentansprüche

1. Vorrichtung (1) zum Transportieren und Abstützen von flachen, plattenförmigen Gegenständen (9), insbesondere (Flach-)Glastafeln, mit wenigstens einer Stützwand (3 bzw. 5), wobei die wenigstens eine Stützwand (3 bzw. 5) Zuströmöffnungen (21) für ein Stützfluid aufweist und wobei den Zuströmöffnungen (21) Abströmöffnungen (23) für das Stützfluid zugeordnet sind, **dadurch gekennzeichnet, dass** an der von dem Gegenstand (9) abgewandten Seite der wenigstens einen Stützwand (3 bzw. 5) eine allen Abströmöffnungen (23) der Stützwand (3 bzw. 5) gemeinsam zugeordnete Kammer (33), durch die Stützfluid abgezogen wird und die sich über die gesamte Fläche der Stützwand (3) erstreckt, und eine weitere Kammer (39), durch die Stützfluid zugeführt wird, vorgesehen ist, dass von jeder Kammer (33) eine Abziehleitung (35) ausgeht, die über wenigstens eine Druckerhöhungsvorrichtung (37) an eine Zuführleitung (31) angeschlossen ist und dass die Druckerhöhungsvorrichtung (37) saugseitig an die Kammer (33) und druckseitig an die weitere Kammer (39) angeschlossen ist.

2. Vorrichtung nach Anspruch 1, **dadurch gekennzeichnet, dass** zwei im Wesentlichen lotrecht stehende Stützwände (3,5), die einander gegenüberliegen, vorgesehen sind, die einen Zwischenraum (7) bilden, in dem ein Gegenstand (9) zu halten bzw. zu transportieren ist.

3. Vorrichtung nach Anspruch 1 oder 2, **dadurch gekennzeichnet, dass** die Abströmöffnungen (23) jeweils rings um die Zuströmöffnungen (21) angeordnet sind.

4. Vorrichtung nach einem der Ansprüche 1 bis 3, **dadurch gekennzeichnet, dass** je eine Zuströmöffnung (21) in Kombination mit mehreren der Zuströmöffnung (21) zugeordneten Abströmöffnungen (23) eine Gruppe (25) bildet.

5. Vorrichtung nach Anspruch 4, **dadurch gekennzeichnet, dass** die Gruppen (25) aus Zuströmöffnungen (21) und Abströmöffnungen (23) über die gesamte Fläche der wenigstens einen Stützwand (3 bzw. 5) gleichmäßig verteilt sind.

6. Vorrichtung nach einem der Ansprüche 1 bis 5, **dadurch gekennzeichnet, dass** der lichte Querschnitt einer Zuströmöffnung (21) größer ist als die Summe der lichten Querschnitte aller der Zuströmöffnung (21) zugeordneten Abströmöffnungen (23).

7. Vorrichtung nach einem der Ansprüche 1 bis 6, **dadurch gekennzeichnet, dass** das Stützfluid in den Raum (7) bzw. in die Teilräume (8) durch die Zuführleitung (31) direkt über die Zuströmöffnung (21) zugeführt ist.

8. Vorrichtung nach Anspruch 7, **dadurch gekennzeichnet, dass** jeder Zuströmöffnung (21) für das Zuführen von Stützfluid eine Zuführleitung (31) zugeordnet ist.

9. Vorrichtung nach einem der Ansprüche 1 bis 8, **dadurch gekennzeichnet, dass** an der von dem Gegenstand (9) abgewandten Seite der wenigstens einen Stützwand (3 bzw. 5) jeder Abströmöffnung (23) je eine Kammer (33) zugeordnet ist.

10. Vorrichtung nach einem der Ansprüche 1 bis 8, **dadurch gekennzeichnet, dass** an der von dem Gegenstand (9) abgewandten Seite der wenigstens einen Stützwand (3 bzw. 5) eine den Abströmöffnungen (23) einer Gruppe (25) gemeinsame Kammer (33) zugeordnet ist.

11. Vorrichtung nach einem der Ansprüche 1 bis 10, **dadurch gekennzeichnet, dass** die wenigstens eine Druckerhöhungsvorrichtung (37) eine Pumpe ist.

12. Vorrichtung nach einem der Ansprüche 1 bis 11, **dadurch gekennzeichnet, dass** das Stützfluid über die gesamte Fläche des Gegenstandes (9) einen konstanten Druck aufweist.

13. Vorrichtung nach einem der Ansprüche 1 bis 12, **dadurch gekennzeichnet, dass** die Stützkraft des Stützfluides im Randbereich des Gegenstandes (9) gleich groß ist, wie die Stützkraft über die Fläche des Gegenstandes (9).

14. Vorrichtung nach einem der Ansprüche 1 bis 13, **dadurch gekennzeichnet, dass** der Druck des Stützfluides variabel einstellbar ist.

15. Vorrichtung nach einem der Ansprüche 1 bis 14, **dadurch gekennzeichnet, dass** das Stützfluid ein Gas, insbesondere Luft, ist.

16. Vorrichtung nach einem der Ansprüche 1 bis 14, **dadurch gekennzeichnet, dass** das Stützfluid eine Flüssigkeit, insbesondere Wasser, ist.

17. Vorrichtung nach einem der Ansprüche 1 bis 16, **dadurch gekennzeichnet, dass** der Abstand der Stützplatten (3,5) zueinander variabel ist.

18. Vorrichtung nach Anspruch 17, **dadurch gekennzeichnet, dass** wenigstens eine Stützplatte (3 bzw. 5) quer zu ihrer Flächenerstreckung verstellbar ist.

19. Vorrichtung nach einem der Ansprüche 1 bis 18, **dadurch gekennzeichnet, dass** die Stützwand (3) horizontal ausgerichtet ist und dass ein Gegenstand (9), insbesondere eine Glasscheibe, oberhalb der Stützwand (3) angeordnet ist.

20. Vorrichtung nach einem der Ansprüche 1 bis 19, **dadurch gekennzeichnet, dass** sich die weitere Kammer (39) über die gesamte Fläche der Stützwand (3) erstreckt.

21. Vorrichtung nach einem der Ansprüche 1 bis 20, **dadurch gekennzeichnet, dass** die Zuführleitungen (31) zu den Zuströmöffnungen (21) in der Stützwand (3) die Kammer (33) durchsetzen.

22. Vorrichtung nach Anspruch 21, **dadurch gekennzeichnet, dass** die Zuführleitungen (31) mit einem Ende an der Stützwand (3) und mit dem anderen Ende an der Zwischenwand (41) zwischen den Kammern (33, 39) dicht angeschlossen sind.

23. Vorrichtung nach einem der Ansprüche 1 bis 22, **dadurch gekennzeichnet, dass** im Raum (8) zwischen dem Gegenstand (9) und der Stützwand (3) ein Drucksensor (45) vorgesehen ist.

24. Vorrichtung nach Anspruch 23, **dadurch gekennzeichnet, dass** der Drucksensor (45) über eine Steuerung (47) wirkmäßig mit der Druck-erhöhungsvorrichtung (37) verbunden ist.

## Claims

1. Device (1) for transporting and supporting flat, sheetshaped articles (9), especially sheets of (flat) glass, with at least one support wall (3 and 5), whereby the at least one support wall (3 and 5) has feed openings (21) for a support fluid, and whereby drain openings (23) for the support fluid are assigned to the feed openings (21), **characterized in that** there is a chamber (33) which is common to all drain openings (23) of one group (25) on the side of at least one support wall (3 and 5) facing away from the artic1e (9) through which support fluid is drained and which extends over the entire surface of the support wall (3), and a further chamber (39) through which support fluid is feeded, that a drain line (35) proceeds from each chamber (33) which is connected to the supply line (31) via at least one pressure increasing device (37) and that the pressure increasing device (37) on the suction side is connected with chamber (33) and on the high-pressure side with the further chamber (39).

2. Device according to claim 1, **characterized in that** there are two essentially vertical support walls (3, 5) which are opposite one another and which form an intermediate space (7) in which the article (9) is to be held and transported.

3. Device according to claim 1 or 2, **characterized in that** the drain openings (23) are each arranged around the feed openings (21).

4. Device according to one of claims 1 to 3, **characterized in that** one feed opening (21) at a time in combination with several drain openings (23) forms a group (25).

5. Device according to claim 4, **characterized in that** the groups of feed openings (21) and drain openings (23) are uniformly distributed over the entire surface of at least one support wall (3 and 5).

6. Device according to one of claims 1 to 5, **characterized in that** the inside cross section of the feed opening (21) is larger than the sum of the inside cross sections of all the drain openings (23) which are assigned to the feed opening (21).

7. Device according to one of claims 1 to 6, **characterized in that** the support fluid is supplied to the space (7) or the component spaces (8) by a supply line (31) directly via the feed opening (21).

8. Device according to claim 7, **characterized in that** one supply line (31) is assigned to each feed opening (21) for supply of support fluid.

9. Device according to one of claims 1 to 8, **characterized in that** one chamber (33) at a time is assigned to each drain opening (23) on the side of at least one support wall (3 and 5) facing away from the article (9).

10. Device according to one of claims 1 to 8, **characterized in that** there is a chamber (33) which is common to all drain openings (23) of one group (25) on the side of at least one support wall (3 and 5) facing away from the article (9).

11. Device according to one of claims 1 to 10, **characterized in that** the at least one pressure increasing device (37) is a pump.

12. Device according to one of claims 1 to 11, **characterized in that** the support fluid has a constant pressure over the entire surface of the article (9).

13. Device according to one of claims 1 to 15, **characterized in that** the support force of the support fluid in the edge area of the article (9) is the same as the support force over the surface of the article (9).

14. Device according to one of claims 1 to 13, **characterized in that** the pressure of the support fluid can be variably set.

15. Device according to one of claims 1 to 14, **characterized in that** the support fluid is a gas, especially air.

16. Device according to one of claims 1 to 14, **characterized in that** the support fluid is a liquid, especially water.

17. Device according to one of claims 1 to 16, **characterized in that** the distance of the support plates (3, 5) to one another is variable.

18. Device according to claim 17, **characterized in that** at least one support plate (3 or 5) can be adjusted transversely to its superficial extension.

19. Device according to one of claims 1 to 18, **characterized in that** the support wall (3) is aligned horizontally and wherein the article (9), especially a pane of glass, is located above the support wall (3).

20. Device according to one of claims 1 to 19, **characterized in that** the further chamber (39) extends over the entire surface of the support wall (3).

21. Device according to one of claims 1 to 20, **characterized in that** the supply lines (31) to the feed openings (21) in the support wall (3) penetrate the chamber (33).

22. Device according to claim 21, **characterized in that** the supply lines (31) are tightly connected with one end on the support wall (3) and with the other end on the intermediate wall (41) between the chambers (33, 39).

23. Device according to one of claims 1 to 22, **characterized in that** there is a pressure sensor (45) in the space (8) between the article (9) and the support wall (3).

24. Device according to claim 29, **characterized in that** the pressure sensor (45) is dynamically connected to the pressure increasing device (37) by way of a control (47).

## Revendications

1. Dispositif (1) pour le transport et le support d'objets plats en forme de plaques (9), en particulier de plaques de verre (plates), avec au moins une paroi de support (3 ou 5), dans lequel l'au moins une paroi de support (3 ou 5) comporte des orifices de flux entrant (21) pour un fluide de support, et dans lequel des orifices de flux sortant (23) destinés au fluide de support sont attribués aux orifices de flux entrant (21), **caractérisé en ce que** du côté de l'au moins une paroi de support (3 ou 5) qui est détourné de l'objet (9), sont prévues une chambre (33) attribuée communément à tous les orifices de flux sortant (23) de la paroi de support (3 ou 5), par laquelle du fluide des support est évacué et qui s'étend sur l'ensemble de la surface de la paroi de support (3), et une autre chambre (39), par laquelle le fluide de support est alimenté, **en ce qu'**une conduite d'évacuation (35) part de chaque chambre (33), tout en étant raccordée à une conduite d'alimentation (31) par l'intermédiaire d'au moins un dispositif d'augmentation de pression (37), et **en ce que** le dispositif d'augmentation de pression (37) est raccordé à la chambre (33) côté aspiration et à l'autre chambre (39) côté pression.

2. Dispositif selon la revendication 1, **caractérisé en ce que** les deux parois de support (3, 5) disposées essentiellement verticalement l'une en face de l'autre sont prévues, formant un espace intermédiaire (7) dans lequel un objet (9) peut être maintenu ou transporté.

3. Dispositif selon l'une des revendications 1 ou 2, **caractérisé en ce que** les orifices d'évacuation (23) sont respectivement disposés en cercle autour des orifices d'alimentation (21).

4. Dispositif selon l'une des revendications 1 à 3, **caractérisé en ce que** chaque orifice d'alimentation (21) forme un groupe (25) en combinaison avec plusieurs des orifices d'évacuation (23) attribués à l'orifice d'alimentation (21).

5. Dispositif selon la revendication 4, **caractérisé en ce que** les groupes (25) d'orifices d'alimentation (21) et d'orifices d'évacuation (23) sont répartis de façon régulière sur l'ensemble de la surface de l'au moins une paroi de support (3 ou 5).

6. Dispositif selon l'une des revendications 1 à 5, **caractérisé en ce que** la section transversale intérieure d'un orifice d'alimentation (21) est supérieure à la somme des sections transversales intérieures de tous les orifices d'évacuation (23) attribués à l'orifice d'alimentation (21).

7. Dispositif selon l'une des revendications 1 à 6, **caractérisé en ce que** le fluide de support est alimenté vers la chambre (7) ou vers les chambres partielles (8) par la conduite d'alimentation (31), en passant directement par l'orifice d'alimentation (21).

8. Dispositif selon la revendication 7, **caractérisé en ce qu'**une conduite d'alimentation (31) est attribuée à chaque orifice d'alimentation (21) pour l'alimentation du fluide de support.

9. Dispositif selon l'une des revendications 1 à 8, **caractérisé en ce que** du côté de l'au moins une paroi de support (3 ou 5) qui est détourné de l'objet (9), une chambre (33) est attribuée à chaque orifice d'évacuation (23).

10. Dispositif selon l'une des revendications 1 à 8, **caractérisé en ce que** du côté de l'au moins une paroi de support (3 ou 5) qui est détourné de l'objet (9), une chambre commune (33) est attribuée aux orifices d'évacuation (23) d'un groupe (25).

11. Dispositif selon l'une des revendications 1 à 10, **caractérisé en ce que** l'au moins un dispositif d'augmentation de pression (37) est une pompe.

12. Dispositif selon l'une des revendications 1 à 11, **caractérisé en ce que** le fluide de support présente une pression constante sur l'ensemble de la surface de l'objet (9).

13. Dispositif selon l'une des revendications 1 à 12, **caractérisé en ce que** la force de support du fluide de support dans la région de bord de l'objet (9) est identique à la force de support sur la surface de l'objet (9).

14. Dispositif selon l'une des revendications 1 à 13, **caractérisé en ce que** la pression du fluide de support peut être réglée de façon variable.

15. Dispositif selon l'une des revendications 1 à 14, **caractérisé en ce que** le fluide de support est un gaz, en particulier de l'air.

16. Dispositif selon l'une des revendications 1 à 14, **caractérisé en ce que** le fluide de support est un liquide, en particulier de l'eau.

17. Dispositif selon l'une des revendications 1 à 16, **caractérisé en ce que** l'espacement entre les plaques de support (3, 5) est variable.

18. Dispositif selon la revendication 17, **caractérisé en ce que** l'au moins une plaque de support (3 ou 5) est réglable dans le sens de la largeur de son étendue de surface.

19. Dispositif selon l'une des revendications 1 à 18, **caractérisé en ce que** la paroi de support (3) est orientée horizontalement et **en ce qu'**un objet (9), en particulier une plaque de verre, est disposé au-dessus de la paroi de support (3).

20. Dispositif selon l'une des revendications 1 à 19, **caractérisé en ce que** l'autre chambre (39) s'étend sur l'ensemble de la surface de la paroi de support (3).

21. Dispositif selon l'une des revendications 1 à 20, **caractérisé en ce que** les conduites d'alimentation (31) vers les orifices d'alimentation (21) dans la paroi de support (3) traversent la chambre (33).

22. Dispositif selon la revendication 21, **caractérisé en ce que** les conduites d'alimentation (31) sont raccordées de façon étanche à la paroi de support (3) par une extrémité et à la paroi intermédiaire (41) entre les chambres (33, 39) par l'autre extrémité.

23. Dispositif selon l'une des revendications 1 à 22, **caractérisé en ce qu'**un capteur de pression (45) est prévu dans la chambre (8) entre l'objet (9) et la paroi de support (3).

24. Dispositif selon la revendication 23, **caractérisé en ce que** le capteur de pression (45) est opérationnellement relié au dispositif d'augmentation de pression (37) par une commande (47).
